(19) Europäisches Patentamt
European Patent Office
Office européen des brevets

(11) **EP 3 296 147 A1**

(12) **DEMANDE DE BREVET EUROPEEN**

(43) Date de publication:
**21.03.2018 Bulletin 2018/12**

(51) Int Cl.:
**B60L 15/20** *(2006.01)*  **F16H 1/06** *(2006.01)*
**B60K 6/387** *(2007.10)*  B60K 1/00 *(2006.01)*

(21) Numéro de dépôt: **17177496.1**

(22) Date de dépôt: **22.06.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **20.09.2016 FR 1658793**

(71) Demandeur: **RENAULT s.a.s.**
**92100 Boulogne-Billancourt (FR)**

(72) Inventeur: **DUMAS, Eric**
**78800 HOUILLES (FR)**

(54) **TRANSMISSION POUR VEHICULE AUTOMOBILE A PROPULSION ELECTRIQUE**

(57)    Cette transmission (2) pour véhicule automobile à propulsion électrique comporte un arbre primaire (4) relié mécaniquement à une machine électrique du véhicule automobile, un arbre secondaire (12) relié mécaniquement à un différentiel (18) du véhicule automobile.

La transmission (2) comprend une boîte de vitesses à unique rapport de vitesses capable de relier mécaniquement l'arbre primaire (4) et l'arbre secondaire (12).

FIG.2

EP 3 296 147 A1

**Description**

L'invention concerne le domaine des transmissions pour véhicules automobiles à propulsion électrique.

De tels véhicules sont équipés d'une machine électrique de traction et d'une transmission qui établit une chaine cinématique entre la machine électrique et des roues propulsives. Une machine électrique de traction présente notamment une plage d'utilisation continue et homogène depuis l'arrêt jusqu'à sa vitesse maximale, laquelle est souvent bien supérieure à celle d'un moteur thermique.

Grâce à ces propriétés, en utilisant un rapport de transmission adapté aux vitesses les plus élevées prévues pour un véhicule donné, il est possible de couvrir toute l'étendue d'utilisation avec un seul rapport de réduction. Pour diminuer la masse du véhicule et l'encombrement entre la machine électrique de traction et les roues propulsives, les véhicules automobiles électriques sont de manière générale dépourvus d'embrayage ou de boîte de vitesses, et utilisent une chaîne cinématique permanente entre la sortie de la machine électrique et l'entrée du différentiel du train des roues propulsives. L'ensemble du groupe moto propulseur est ainsi allégé au maximum et présente un encombrement minimal. Pour ces raisons, un tel agencement est généralement considéré comme satisfaisant lorsque la machine électrique de traction fonctionne en mode menant, c'est-à-dire lorsque le véhicule automobile est mené par la machine électrique de traction.

Il en est toutefois autrement lorsque le conducteur relâche la pédale d'accélérateur, et que la machine électrique de traction passe en mode menée. En d'autres termes, dans ce mode, le véhicule fournit par son inertie de l'énergie mécanique à la machine électrique de traction. Cette dernière peut en effet se voir entraînée en rotation à des vitesses très élevées, par exemple l'ordre de 20 000 tours par minute, voire de l'ordre de 50 000 tours par minute dans un véhicule équipé d'une autre source de traction. Il en résulte un risque de casse ou à tout le moins un endommagement prématuré de la machine électrique de traction.

Un autre inconvénient est l'apparition d'un phénomène de trainée s'opposant au mouvement du véhicule. En effet, en mode menée, la machine électrique de traction et les éléments de chaîne cinématique reliant la machine électrique de traction aux roues propulsives engendrent un couple résistant. Il résulte de l'apparition de ce phénomène une sensation de freinage désagréable pour le conducteur ainsi que des gaspillages d'énergie.

Au vu de ce qui précède, l'invention a pour but de fournir une transmission pour véhicule automobile à propulsion électrique palliant les inconvénients précités.

En particulier, l'invention a pour objet de protéger la machine électrique de traction contre les survitesses et de limiter l'apparition de la traînée lorsque la machine électrique de traction est en mode menée, tout en présentant un encombrement minimal.

À cet effet, il est prévu une transmission pour véhicule automobile à propulsion électrique comportant un arbre primaire relié mécaniquement à une machine électrique du véhicule automobile, un arbre secondaire relié mécaniquement à un différentiel du véhicule automobile.

Selon une de ses caractéristiques générales, cette transmission comprend une boîte de vitesses à unique rapport de vitesses capable de relier mécaniquement l'arbre primaire et l'arbre secondaire.

Le terme de « boîte de vitesses » s'entend dans la présente demande selon sa définition usuelle, c'est-à-dire un dispositif mécanique ou mécatronique permettant d'adapter la transmission d'un mouvement entre un arbre moteur et un arbre récepteur.

En fournissant une boîte de vitesses capable de relier mécaniquement l'arbre primaire et l'arbre secondaire, il est possible de couper la chaîne cinématique entre les roues du véhicule et la machine électrique de traction. On protège ainsi la machine électrique et on empêche l'apparition de la traînée. En outre, on limite l'encombrement en utilisant une boîte de vitesses à unique rapport de vitesses.

Selon un mode de réalisation, la boîte de vitesses comprend un pignon fou monté rotatif autour de l'arbre secondaire, la boîte de vitesses comprenant un moyen d'accouplement en rotation du pignon fou avec l'arbre secondaire.

De manière avantageuse, le pignon fou est connecté mécaniquement avec l'arbre secondaire au moyen d'un palier à aiguilles.

Avantageusement, le moyen d'accouplement comprend un baladeur monté coulissant autour d'une surface cylindrique extérieure du pignon fou et lié en rotation avec le pignon fou.

Dans un mode de réalisation, le baladeur comprend une pluralité de doigts axiaux respectivement insérés dans des ouvertures axiales correspondantes pratiquées dans le pignon fou.

De préférence, le baladeur comprend une pluralité de doigts axiaux, le pignon fou étant monté rotatif autour d'une bague d'entrainement comprenant une collerette avec une pluralité d'évidements aptes à recevoir respectivement les doigts axiaux du baladeur.

Avantageusement, la bague d'entrainement est mécaniquement reliée à l'arbre secondaire par des cannelures.

On peut en outre prévoir un capteur de la vitesse de rotation de l'arbre secondaire et un système de commande de la machine électrique de traction du véhicule automobile apte à déterminer un signal d'alimentation, le signal d'alimentation étant déterminé de sorte à commander la machine électrique de traction pour qu'elle adapte la vitesse de rotation de l'arbre primaire par rapport à la vitesse de rotation de l'arbre secondaire.

Avantageusement, le signal d'alimentation est déterminé de sorte que la vitesse de rotation de l'arbre

primaire tend vers une vitesse de rotation de consigne déterminée en fonction de la vitesse de rotation de l'arbre secondaire selon la relation suivante :

$$\left| N_{1Consigne} \right| = \frac{1}{a} \cdot \left| N_2 \right| + S_0 ,$$

où $N_{1Consigne}$ est la vitesse de rotation de consigne, $N_2$ est la vitesse de rotation de l'arbre secondaire, a est l'unique rapport de réduction de la boîte de vitesses et $S_0$ est un terme de décalage.

Selon un autre aspect, il est prévu un procédé de commande d'une transmission telle que définie précédemment, dans lequel on mesure une vitesse de rotation de l'arbre secondaire, on établit un signal d'alimentation de la machine électrique et on met en oeuvre un accouplement de la boîte de vitesses.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est une représentation axiale d'une transmission selon un exemple de réalisation de l'invention,
- la figure 2 est une vue en coupe brisée de la transmission de la figure 1,
- la figure 3 est une vue en coupe droite de l'arbre secondaire de la transmission de la figure 1,
- la figure 4 représente en perspective le pignon fou de la transmission de la figure 1,
- la figure 5 représente en perspective la bague d'entraînement de la transmission de la figure 1, et
- la figure 6 représente en perspective le baladeur de la transmission de la figure 1.

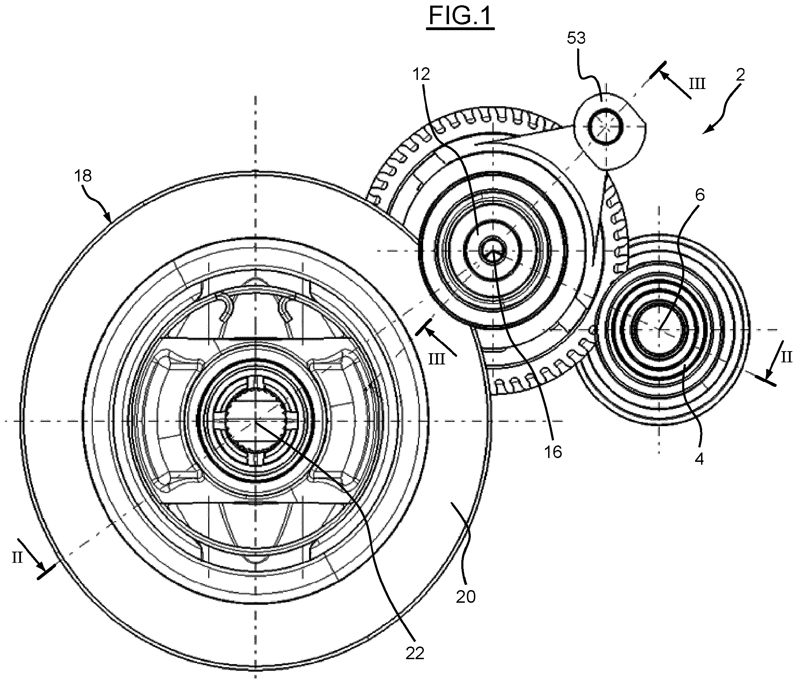

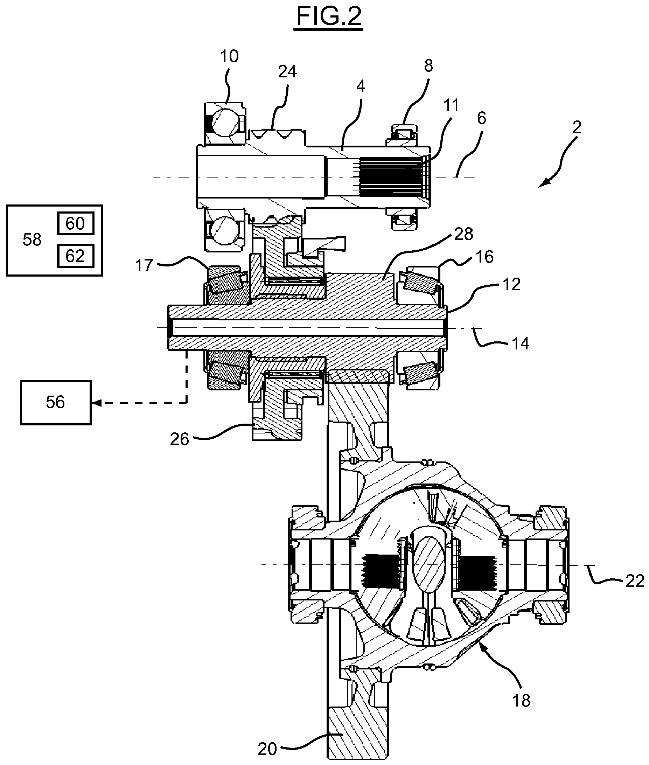

On a représenté une transmission 2 selon l'invention sur les figures 1 et 2, respectivement selon une vue axiale et une vue en coupe brisée selon le plan II-II. La transmission 2 est destinée à être incorporée dans un véhicule automobile à propulsion électrique. La transmission 2 a pour fonction de transmettre de la puissance mécanique entre une machine électrique de traction (non représentée) du véhicule et deux roues propulsives (non représentées) du véhicule. Bien que, dans l'exemple de réalisation illustré, le véhicule comprenne deux roues propulsives, on peut tout à fait envisager sans sortir du cadre de l'invention une transmission destinée à être incorporée dans un véhicule à quatre roues propulsives.

La machine électrique de traction est mécaniquement connectée de manière réversible avec un arbre primaire 4. L'arbre primaire 4 est monté rotatif par rapport à une caisse (non représentée) du véhicule autour d'un axe primaire 6 au moyen de deux paliers rotatifs. Plus particulièrement, un roulement à rouleaux 8 et un roulement à billes 10 sont montés autour de l'arbre primaire 4, le roulement 8 étant axialement plus proche de la machine électrique de traction que le roulement 10. Par « mécaniquement connectée de manière réversible », on entend que la machine électrique de traction est capable d'entraîner en rotation l'arbre primaire 4 autour de l'axe 6, l'arbre primaire 4 étant capable de fournir de l'énergie mécanique à la machine électrique de traction. Dans l'exemple représenté, la machine électrique de traction comprend un arbre moteur (non représenté) qui entraîne directement en rotation l'arbre primaire 4. Pour ce faire, l'arbre primaire 4 est creux et la machine électrique de traction est montée coaxialement par rapport à l'axe 6. L'arbre moteur entraine l'arbre primaire 4 au moyen de cannelures externes (non représentée) qui coopèrent avec des cannelures internes 11 de l'arbre primaire 4.

La transmission 2 comporte un arbre secondaire 12 monté rotatif par rapport à la caisse du véhicule autour d'un axe secondaire 14. Pour ce faire, deux paliers rotatifs à rouleaux coniques 16 et 17 sont montés sur l'arbre secondaire 12 et axialement situés en regard des paliers rotatifs 8 et 10, respectivement.

La transmission 2 comporte un différentiel 18 qui a pour fonction de répartir l'énergie mécanique transitant par la transmission 2 aux deux demi-arbres respectivement reliés aux deux roues propulsives. Le différentiel 18 comporte une couronne 20 montée rotative par rapport à la caisse du véhicule autour d'un axe de différentiel 22.

L'axe primaire 6, l'axe secondaire 14 et l'axe de différentiel 22 sont tous trois sensiblement parallèles. Dans toute la présente demande, sauf lorsqu'il en est disposé autrement, le terme « direction axiale » doit être compris comme se rapportant à la direction commune des trois axes 6, 14 et 22.

L'arbre primaire 4 comporte un pignon fixe 24 à dentures hélicoïdales qui engrène avec la denture hélicoïdale correspondante d'un pignon fou 26 disposé autour de l'arbre secondaire 12. Le pignon fou 26 est libre de pivoter relativement par rapport à l'arbre secondaire 12 autour de l'axe secondaire 14. Un mécanisme de boîte de vitesses, qui sera détaillé par la suite, permet de rendre solidaires en rotation l'arbre secondaire 12 et le pignon fou 26.

L'arbre secondaire 12 comporte un pignon de descente 28 axialement décalé par rapport au pignon fou 26. Le pignon de descente 28 comporte des dentures droites coopérant avec des dentures droites correspondantes pratiquées sur la couronne 20 du différentiel 18.

Ainsi, en rendant solidaire le pignon fou 26 de l'arbre secondaire 12 au moyen du mécanisme de boîte de vitesses, il est possible d'établir une chaîne cinématique entre la machine électrique de traction et les roues propulsives du véhicule.

Bien que, dans l'exemple décrit, le pignon 28 et la couronne 20 présentent des dentures droites, on peut bien évidemment sans sortir du cadre de l'invention, envisager tout autre type de denture. En particulier, le pignon 28 et la couronne 20 peuvent présenter des dentures en hélice, ce qui présente l'avantage de diminuer le bruit causé par la boîte de vitesses.

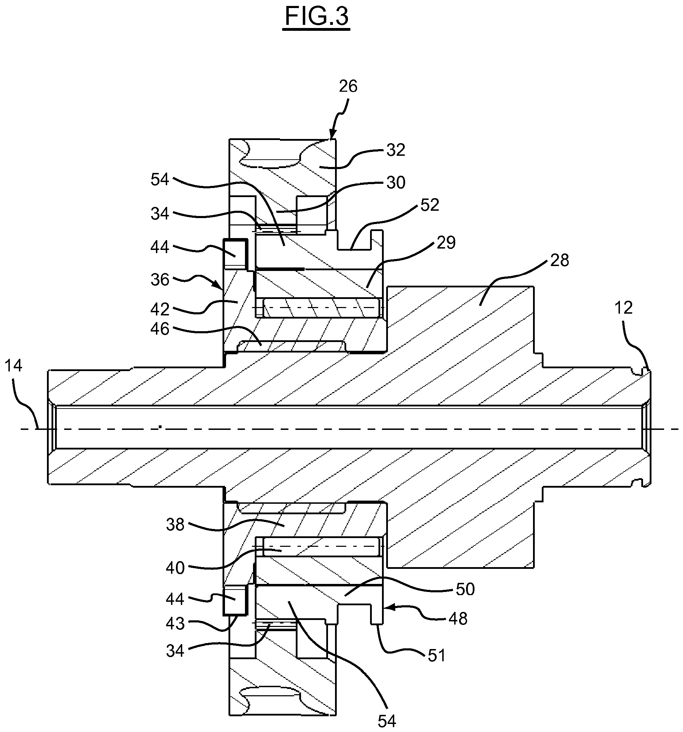

En référence aux figures 3 à 6, il va maintenant être décrit le fonctionnement du mécanisme de boîte de vitesses. La figure 3 représente une vue en coupe droite selon le plan III-III de la transmission 2.

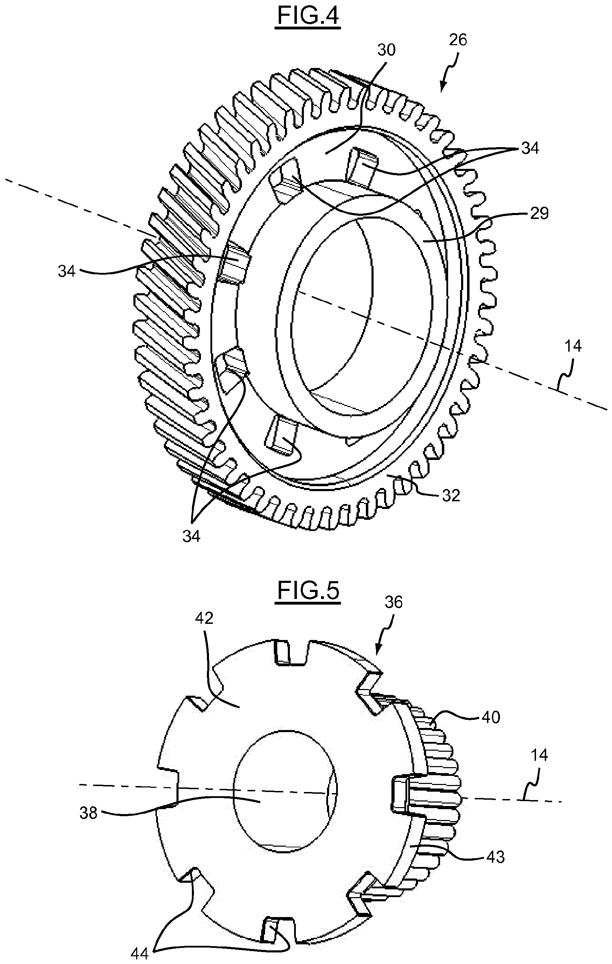

Comme cela est visible sur les figures 3 et 4, le pignon fou 26 est notamment constitué d'un manchon intérieur 29 de forme cylindrique s'étendant autour de l'axe secondaire 14. Le manchon intérieur 29 s'étend radialement vers l'extérieur, par rapport à l'axe secondaire 14, en une collerette intermédiaire 30 de forme sensiblement plane perpendiculaire à la direction axiale. La collerette intermédiaire 30 est située à une extrémité axiale du manchon intérieur 29. La collerette intermédiaire s'étend radialement jusqu'à un manchon extérieur 32. Le manchon extérieur 32 comporte une surface cylindrique extérieure (non référencée) sur laquelle sont pratiquées les dentures hélicoïdales qui coopèrent avec les dentures correspondantes du pignon fixe 24.

En référence aux figures 3 et 5, le pignon fou 26 est monté axialement autour d'une bague d'entraînement 36. La bague d'entraînement 36 est axisymétrique autour de l'axe secondaire 14.

La bague d'entraînement 36 comporte une portion intérieure 38 cylindrique à section circulaire. La portion intérieure 38 est de longueur selon la direction axiale supérieure à la longueur selon la direction axiale du manchon intérieur 28. La portion cylindrique 38 est radialement délimitée par une surface cylindrique intérieure (non référencée) et une surface cylindrique extérieure (non référencée).

Le pignon fou 26 est libre de pivoter autour de l'axe secondaire 14 par rapport la bague d'entrainement 36. Pour ce faire, il est prévu un palier rotatif à aiguilles 40 s'étendant radialement par rapport à l'axe secondaire 14 entre une surface cylindrique extérieure (non référencée) de la portion cylindrique 38 et une surface cylindrique intérieure (non référencée) du manchon intérieur 28.

La bague d'entraînement 36 comporte une collerette externe 42 s'étendant, radialement par rapport à l'axe secondaire 14, vers l'extérieur depuis la portion cylindrique 38. La collerette externe 42 est délimitée, radialement par rapport à l'axe secondaire 14, par une surface extérieure cylindrique 43. La collerette externe 42 délimite axialement la portion cylindrique 38.

La bague d'entraînement 36 est montée sur l'arbre secondaire 12 par l'intermédiaire d'une pluralité de cannelures 46. La bague d'entrainement 36 est ainsi solidaire en rotation avec l'arbre secondaire 12. Axialement, la bague d'entraînement 36 est maintenue par le pignon de descente 28 et par le roulement 16.

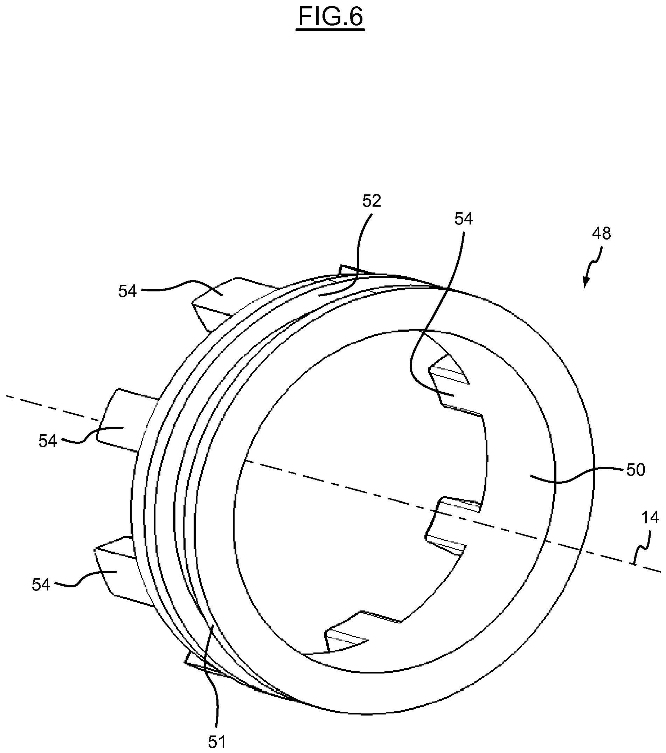

Comme cela est visible sur les figures 3 et 6, le mécanisme de boîte de vitesses comporte un baladeur 48 de forme axisymétrique autour de l'axe secondaire 14.

Le baladeur 48 comprend une partie cylindrique 50 à section circulaire qui est délimitée, radialement par rapport à l'axe secondaire 14, par une surface cylindrique intérieure (non référencée) de diamètre sensiblement égal ou très légèrement supérieur au diamètre de la surface cylindrique extérieure du manchon 28. De l'autre côté, la partie cylindrique 50 est délimitée, radialement par rapport à l'axe secondaire 14, par une surface extérieure cylindrique 51. La surface extérieure cylindrique 51 et la surface extérieure cylindrique 43 de la bague d'entrainement 36 ont sensiblement le même diamètre.

La portion cylindrique 50 du baladeur 48 est ainsi montée autour du manchon intérieur 28 du pignon fou 26. Le baladeur 48 et le manchon 28 peuvent être réalisés en un matériau favorisant le glissement de l'un par rapport à l'autre. De manière alternative, une fine couche de lubrifiant peut être prévue entre la surface cylindrique intérieure de la partie cylindrique 50 et la surface cylindrique extérieure du manchon intérieur 28 pour favoriser le glissement de l'un par rapport à l'autre.

La partie cylindrique 50 comporte une rainure annulaire externe 52 s'étendant radialement vers l'intérieur depuis la surface cylindrique extérieure 51. La rainure 52 est conçue pour permettre la manipulation par une fourchette d'actionnement 53 (cf. figure 1) en vue du déplacement selon la direction axiale du baladeur 48, relativement par rapport à l'arbre secondaire 12.

Comme cela est visible sur les figures 3 à 6, le pignon fou 26 comporte une pluralité d'ouvertures axiales 34 sensiblement identiques et réparties de manière régulière sur la circonférence de la collerette intermédiaire 30. Contrairement au plan de coupe II-II, le plan de coupe III-III traverse deux des huit ouvertures axiales 34. De même, la bague d'entrainement 36 comporte une pluralité d'évidements axiaux 44 sensiblement identiques et répartis de manière régulière sur la circonférence de la collerette externe 42. Le baladeur 48 comprend une pluralité de doigts axiaux 54 s'étendant axialement depuis une surface frontale (non référencée) de la partie cylindrique 50. Les doigts axiaux 54 sont sensiblement identiques et sont répartis de manière régulière sur la circonférence de la partie cylindrique 50.

Les doigts 54 ont une longueur selon la direction axiale comprise entre 1,5 et 2,5 fois la longueur selon la direction axiale des ouvertures 34. Les doigts 54 sont de forme sensiblement complémentaire par rapport à la forme des ouvertures 34 ou des évidements 44. De manière avantageuse, les dimensions des doigts axiaux 54 sont légèrement plus petites que celles des ouvertures 34 ou des évidements 44, de sorte à favoriser l'insertion, le dégagement ou le coulissement d'un doigt 54 dans une ouverture 34 ou un évidement 44.

De manière avantageuse, le pignon fou comporte autant d'ouvertures 34 que la bague d'entrainement 36 comprend d'évidements 34 et que le baladeur 48 comprend de doigts 54. Le nombre d'ouvertures 34, d'évidements 44 ou de doigts 54 est choisi de manière à trouver un compromis entre un actionnement rendu plus aisé du mécanisme de boîte de vitesses et une solidité accrue de la liaison solidaire mise en place par les doigts axiaux 54. Dans l'exemple représenté, huit doigts axiaux 54 sont prévus, aptes à coopérer avec huit ouvertures axiales 34 et huit évidements axiaux 44.

L'épaisseur des doigts 54 selon la direction orthoradiale par rapport à l'axe secondaire 14 est déterminée en fonction du couple à transmettre et des matériaux choisis.

Lorsque, comme dans l'exemple illustré, le couple fourni à l'arbre secondaire représente environ 1100 N.m, il en résulte, avec huit doigts axiaux 54 et un rayon moyen de portée d'environ 35 mm, un effort d'environ 4300 N par doigt axial 54. Dans ces conditions, lorsque les doigts axiaux 54 sont réalisés en acier classique, une épaisseur du doigt axial 54 de l'ordre de 5 mm est requise pour résister au cisaillement. Dans le cas d'un baladeur fritté, une épaisseur de 10 mm est requise.

Le baladeur 48 est mobile entre une position dégagée, correspondant à la position représentée sur les figures 2 et 3, et une position engagée, dans laquelle le baladeur 48 a été axialement décalé vers la gauche (par rapport aux figures 2 et 3) d'une distance comprise entre un quart et la moitié de la longueur axiale des doigts 54. Dans la position dégagée, les doigts 54 sont introduits dans les ouvertures 34 respectives mais ne s'étendent pas dans les évidements 44. Dans la position engagée, chaque doigt 54 s'étend respectivement au travers d'une ouverture 34 et d'un évidement 44.

Ainsi, en actionnant le déplacement axial du baladeur 48 vers sa position engagée, on lie en rotation la bague d'entraînement 36 avec le pignon fou 26. En actionnant le déplacement inverse, on supprime la liaison en rotation précitée de sorte à permettre à l'un de pivoter par rapport à l'autre autour de l'axe secondaire 14.

En référence à la figure 2, la transmission 2 comporte un capteur de vitesse 56 capable de déterminer la vitesse de rotation $N_2$ de l'arbre secondaire 12 par rapport à la caisse du véhicule. Le capteur 56 peut recevoir l'information $N_2$ en la déduisant d'une mesure d'un autre capteur, par exemple un capteur de la vitesse de rotation des roues du véhicule (non représenté).

La transmission 2 comporte un système de commande 58 de la machine électrique de traction du véhicule. Le système 58 est conçu pour pouvoir déterminer et envoyer un signal d'alimentation à la machine électrique de traction du véhicule, le signal d'alimentation permettant de commander le couple et la vitesse de rotation fournis par la machine électrique de traction.

Le système de commande 58 comporte une première cartographie 60 dans laquelle sont stockées des valeurs de signaux d'alimentation en dégagement $S_{\text{alim-dégagement}}$ en fonction de valeurs de vitesses de rotation $N_2$ de l'arbre secondaire 12. Plus particulièrement, les signaux $S_{\text{alim-dégagement}}$ sont des signaux d'alimentation de la machine électrique de traction prévus pour être fournis à la machine électrique de traction immédiatement avant l'actionnement du déplacement axial du baladeur 48 depuis sa position engagée à sa position dégagée. Dans l'exemple illustré, les signaux $S_{\text{alim-dégagement}}$ sont tels que, lorsque le baladeur 48 est dans sa position dégagée et que la machine électrique de traction est alimentée par le signal $S_{\text{alim-dégagement}}$, la vitesse relative du pignon fou 26 par rapport à l'arbre secondaire 12 est sensiblement nulle. En d'autres termes, dans l'exemple illustré, la vitesse de rotation $N_{\text{Moteur}}$ de l'arbre moteur de la machine électrique alimentée par le signal $S_{\text{alim-dégagement}}$ correspond à la vitesse de rotation $N_2$ multipliée par le coefficient de réduction a de l'engrenage constitué des pignons 24 et 26.

En supposant, pour une meilleure compréhension de l'exposé de l'invention, que la machine électrique de traction délivre une vitesse de rotation $N_{\text{Moteur}}$ égale au signal d'alimentation qui lui est fourni, le signal $S_{\text{alim-dégagement}}$ se calcule, en fonction de la vitesse de rotation $N_2$ de l'arbre secondaire 12, selon l'expression suivante :

$$S_{a\lim-dégagement} = \frac{N_2}{a} = \frac{d_{26}}{d_{24}}.N_2 ,$$

dans laquelle a désigne l'unique rapport de transmission entre le pignon fou 26 et la machine électrique de traction, $d_{26}$ le diamètre du pignon fou 26 et $d_{24}$ le diamètre du pignon fixe 24.

Le système 58 comporte une seconde cartographie 62 contenant des valeurs de signaux d'alimentation en engagement $S_{\text{alim-engagement}}$ en fonction des valeurs de vitesses de rotation $N_2$ de l'arbre secondaire 12. Plus particulièrement, les signaux $S_{\text{alim-engagement}}$ sont des signaux d'alimentation prévus pour être fournis à la machine électrique de traction immédiatement avant l'actionnement du déplacement axial du baladeur 48 depuis sa position dégagée à sa position engagée. Dans l'exemple illustré, les signaux $S_{\text{alim-engagement}}$ sont tels que, lorsque le baladeur 48 est dans sa position dégagée et que la machine électrique de traction est alimentée par le signal $S_{\text{alim-engagement}}$, la vitesse relative du pignon fou 26 par rapport à l'arbre secondaire 12 est égale à une constante non nulle, de l'ordre de quelques tours par minute.

En supposant, comme précédemment, que la vitesse de rotation $N_{\text{Moteur}}$ est égale au signal d'alimentation de la machine électrique, le signal $S_{\text{alim-engagement}}$ se calcule selon l'expression suivante :

$$S_{a\lim-engagement} = \frac{d_{26}}{d_{24}} \cdot (N_2 + S_0) ,$$

où $S_0$ est un seuil de décalage égal à la vitesse relative du pignon fou 26 par rapport à l'arbre secondaire 12. Dans l'exemple illustré, le seuil $S_0$ est compris entre 2 et 10 tours par minute.

Au vu de ce qui précède, il est possible de contrôler au moyen de la transmission 2 la chaine cinématique entre la machine électrique 2 de la manière suivante.

Lorsque le conducteur du véhicule appuie sur la pédale d'accélérateur, le baladeur 48 est manipulé par la fourchette d'actionnement 53 de sorte à être disposé dans sa position engagée. En d'autres termes, les doigts axiaux 54 sont insérés à la fois dans les ouvertures axiales 34 et dans les évidements axiaux 44. Le pignon fou 26 et la bague d'entraînement 36 sont alors solidaires en rotation et la chaine cinématique est établie entre la machine électrique de traction et les roues propulsives.

Lorsque l'utilisateur lâche complètement la pédale d'accélérateur, le baladeur 48 est axialement décalé dans sa position dégagée. Les doigts axiaux 54 sont alors sortis des évidements 44. Le pignon fou 26 est alors libre de pivoter relativement par rapport à l'ensemble solidaire constitué de l'arbre secondaire 12 et de la bague d'entraînement 36. Il en résulte une coupure de la chaîne cinématique entre la machine électrique de traction et les roues propulsives du véhicule.

Dans cet exemple de mise en oeuvre, la manipulation du baladeur 48 résulte d'actions du conducteur du véhicule. On peut toutefois, sans sortir du cadre de l'invention, envisager une stratégie différente, par exemple une manipulation du baladeur 48 résultant d'une stratégie du calculateur du véhicule, ladite stratégie n'étant pas perceptible pour le conducteur. Selon une telle stratégie, il est déterminé en fonction du besoin de passage de couple et d'adhérence de chaque roue si la boite de vitesses doit engager ou non la fourchette d'actionnement 53. Par exemple, pour une vitesse supérieure à 130 km/h, la stratégie mise en oeuvre par le calculateur peut commander un désengagement de la fourchette 53 afin de diminuer la trainée. Si le niveau de charge de la batterie est faible, la stratégie peut commander un engagement de la fourchette 53 de manière plus fréquente, en particulier lors des phases de décélération, pour favoriser la transformation d'énergie mécanique en énergie électrique.

Le passage du baladeur 48 de sa position engagée à sa position dégagée, et plus particulièrement la sortie des doigts axiaux 54 des évidements 44 est facilité par l'utilisation du capteur de vitesse 56 et la cartographie 60. En effet, avant d'actionner le déplacement axial du baladeur 48, on mesure la vitesse de rotation $N_2$ de l'arbre secondaire 12, on recueille la valeur $S_{alim-dégagement}$ en sortie de la cartographie 60 et on fournit ce signal à la machine électrique de traction. En résultat, la vitesse de rotation relative du pignon fou 26 par rapport à l'arbre secondaire 12 s'annule et les doigts axiaux 54 peuvent être facilement extraits des évidements 44.

Lorsque le conducteur presse de nouveau la pédale d'accélérateur, le baladeur 48 est axialement décalé dans sa position engagée. Les doigts axiaux 54 sont alors insérés de nouveaux dans les évidements 44. La chaîne cinématique entre la machine électrique de traction et les roues propulsives du véhicule est alors de nouveau établie.

L'insertion des doigts axiaux 54 dans les évidements 44 est facilitée par l'utilisation du capteur 56 et la cartographie 62. En effet, avant d'actionner le déplacement axial du baladeur 48, on mesure la vitesse de rotation $N_2$, on recueille la valeur $S_{alim-engagement}$ en sortie de la cartographie 62 et on fournit ce signal à la machine électrique de traction. En résultat, la vitesse de rotation relative du pignon fou 26 par rapport à l'arbre secondaire 12 devient constante et égale à la vitesse de rotation de seuil de décalage $S_0$. Les doigts 54 viennent alors axialement en butée contre une surface frontale (non référencée) de la collerette externe 42. Les doigts axiaux 54 continuent de pivoter jusqu'à se trouver en regard des évidements 44 et s'insérer dans ceux-ci. Pour permettre un tel déplacement en deux temps des doigts axiaux 54 du baladeur 48, la fourchette d'actionnement 53 est de préférence reliée à une tige par l'intermédiaire d'un ressort.

On peut tout autant envisager, sans sortir du cadre de l'invention, une phase de ré-établissement de la chaine cinématique entre la machine électrique et les roues propulsives faisant suite à une pression du conducteur sur la pédale de frein. Au début d'une telle phase, on détermine tout d'abord, grâce à la mesure de la vitesse de rotation $N_2$, si la vitesse de rotation de la machine électrique entraînée par les roues propulsives ne dépasse pas une valeur de seuil au-delà de laquelle la machine électrique court un risque de destruction. Si tel n'est pas le cas, on met en oeuvre les mêmes actions que celles détaillées pour établir la chaine cinématique après que le conducteur a pressé de nouveau la pédale d'accélérateur. Une telle phase peut permettre un freinage régénératif par la machine électrique, tout en protégeant cette dernière contre les risques de survitesse.

Au vu de ce qui précède, une telle transmission permet d'établir ou de couper la chaine cinématique entre la machine électrique de traction et les roues propulsives du véhicule. L'invention permet alors de protéger la machine électrique de traction du véhicule notamment lorsque celle-ci fonctionne en mode menée, ainsi que de limiter l'apparition du phénomène de trainée tout en engendrant un encombrement particulièrement limité.

Le mécanisme de boîte de vitesses est particulièrement adapté à des transmissions de véhicule à propulsion électrique, qui voient des couples transmis généralement élevés, notamment parce qu'il est doté de doigts axiaux coopérant avec des évidements, qui permettent une liaison plus robuste que ne le permettraient des crabots. En outre, l'utilisation de doigts axiaux et d'évidements est rendue possible par la propulsion électrique, qui permet de se passer de synchroniseurs classiquement utilisés dans les boîtes de vitesses pour véhicule à propulsion thermique. Il en résulte un moindre encombrement. En outre, l'utilisation d'un palier à aiguilles entre le pignon fou 26 et la bague d'entraînement 36 est particulièrement appropriée car un tel palier est adapté aux hautes vitesses de l'ordre de 5000 tours par minute typiques des transmissions de véhicules à propulsion électrique. En comparaison, l'utilisation de coussinets nécessiterait un système de lubrification et/ou de refroidissement complexe et encombrant.

**Revendications**

1. Transmission (2) pour véhicule automobile à propulsion électrique, comportant un arbre primaire (4) relié mécaniquement à une machine électrique du véhicule automobile, un arbre secondaire (12) relié mécaniquement à un différentiel (18) du véhicule automobile, comportant une boîte de vitesses à unique rapport de vitesses capable de relier mécaniquement l'arbre primaire (4) et l'arbre secondaire (12), qui comprend un pignon fou (26) monté rotatif autour de l'arbre secondaire (12), et un moyen d'accouplement en rotation du pignon fou (26) avec l'arbre secondaire (12), le moyen d'accouplement comprenant un baladeur (48) monté coulissant autour d'une surface cylindrique extérieure du pignon fou (26) et lié en rotation avec le pignon fou (26), dans laquelle le baladeur (48) comprend une pluralité de doigts axiaux (54) respectivement insérés dans des ouvertures axiales (34) correspondantes pratiquées dans le pignon fou (26).

2. Transmission (2) selon la revendication 1, dans laquelle le pignon fou (26) est connecté mécaniquement avec l'arbre secondaire (12) au moyen d'un palier à aiguilles (40).

3. Transmission (2) selon la revendication 1 ou 2, dans laquelle le pignon fou (26) est monté rotatif autour d'une bague d'entraînement (36) comprenant une collerette (42) avec une pluralité d'évidements (44) aptes à recevoir respectivement les doigts axiaux du baladeur (48).

4. Transmission selon la revendication 3, dans laquelle la bague d'entrainement (36) est mécaniquement reliée à l'arbre secondaire (12) par des cannelures (46).

5. Transmission (2) selon l'une des revendications 1 à 4, comprenant un capteur (56) de la vitesse de rotation ($N_2$) de l'arbre secondaire (12) et un système de commande (58) de la machine électrique de traction du véhicule automobile apte à déterminer un signal d'alimentation ($S_{alim-dégagement}$, $S_{alim-engagement}$), le signal d'alimentation ($S_{alim-dégagement}$, $S_{alim-dégagement}$) étant déterminé de sorte à commander la machine électrique de traction pour qu'elle adapte la vitesse de rotation de l'arbre primaire (6) par rapport à la vitesse de rotation ($N_2$) de l'arbre secondaire (12).

6. Transmission (2) selon la revendication 5, dans laquelle le signal d'alimentation ($S_{alim-dégagement}$) est déterminé de sorte que la vitesse de rotation de l'arbre primaire tende vers une vitesse de rotation de consigne déterminée en fonction de la vitesse de rotation ($N_2$) de l'arbre secondaire (12) selon la relation suivante :

$$\left| N_{1Consigne} \right| = \frac{1}{a} \cdot \left| N_2 \right| + S_0 ,$$

où $N_{1Consigne}$ est la vitesse de rotation de consigne, $N_2$ est la vitesse de rotation de l'arbre secondaire (12), a est l'unique rapport de réduction de la boîte de vitesses et $s_0$ est un terme de décalage.

7. Procédé de commande d'une transmission (2) selon l'une des revendications 1 à 6, dans lequel on mesure une vitesse de rotation ($N_2$) de l'arbre secondaire (12), on établit un signal d'alimentation ($S_{alim-dégagement}$, $S_{alim-engagement}$) de la machine électrique et on met en oeuvre un accouplement de la boîte de vitesses.

FIG.1

EP 3 296 147 A1

## FIG.2

## FIG.3

## FIG.4

## FIG.5

# FIG.6

Europäisches
Patentamt

European
Patent Office

Office européen
des brevets

## RAPPORT DE RECHERCHE EUROPEENNE

Numéro de la demande

EP 17 17 7496

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2007/131616 A2 (VOLKSWAGEN AG [DE]; KRUSE GEORG [DE]; WARNECKE RAIMAR [DE]; STREMLAU T) 22 novembre 2007 (2007-11-22) * abrégé; figures 2,3, 4 * * page 3, ligne 17 - page 4, ligne 5 * * page 8, ligne 12 - ligne 30 * ----- | 1-7 | INV. B60L15/20 F16H1/06 B60K6/387 ADD. B60K1/00 |
| A | DE 10 2009 055246 A1 (BOSCH GMBH ROBERT [DE]) 30 juin 2011 (2011-06-30) * alinéa [0027] - alinéa [0031]; figures 1,2 * ----- | 5-7 | |
| A | EP 2 138 371 A1 (PEUGEOT CITROEN AUTOMOBILES SA [FR]) 30 décembre 2009 (2009-12-30) * revendication 1; figures 1-3 * ----- | 5-7 | |
| A | DE 10 2007 010370 A1 (VOLKSWAGEN AG [DE]) 18 septembre 2008 (2008-09-18) * abrégé; figures 2,3 * * alinéa [0008] - alinéa [0009] * ----- | 1-7 | |
| A | GB 2 466 973 A (GM GLOBAL TECH OPERATIONS INC [US]) 21 juillet 2010 (2010-07-21) * abrégé; figures 1,2 * ----- | 1-7 | DOMAINES TECHNIQUES RECHERCHES (IPC) B60L F16H B60K |
| A | US 2014/135169 A1 (ROSSEY MICHEL PAUL [US] ET AL) 15 mai 2014 (2014-05-15) * alinéa [0005]; figures 2,3 * * alinéa [0047] * ----- | 1-7 | |
| A | WO 2016/001534 A1 (PEUGEOT CITROEN AUTOMOBILES SA [FR]) 7 janvier 2016 (2016-01-07) * figure 1 * ----- | 1-7 | |

-/--

Le présent rapport a été établi pour toutes les revendications

| Lieu de la recherche | Date d'achèvement de la recherche | Examinateur |
|---|---|---|
| La Haye | 7 février 2018 | Berkus, Frank |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.................................................................................
& : membre de la même famille, document correspondant

EPO FORM 1503 03.82 (P04C02)

page 1 de 2

Europäisches
Patentamt

European
Patent Office

Office européen
des brevets

## RAPPORT DE RECHERCHE EUROPEENNE

Numéro de la demande

EP 17 17 7496

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 952 416 A1 (PEUGEOT CITROEN AUTOMOBILES SA [FR]) 13 mai 2011 (2011-05-13) * revendication 1; figure 2 * ----- | 1-7 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 7 février 2018 | Berkus, Frank |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 17 17 7496

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-02-2018

| Document brevet cité au rapport de recherche | Date de publication | Membre(s) de la famille de brevet(s) | Date de publication |
|---|---|---|---|
| WO 2007131616 A2 | 22-11-2007 | AT 526192 T<br>DE 102007010369 A1<br>DE 102007010370 A1<br>EP 2018290 A2<br>WO 2007131616 A2 | 15-10-2011<br>29-11-2007<br>18-09-2008<br>28-01-2009<br>22-11-2007 |
| DE 102009055246 A1 | 30-06-2011 | DE 102009055246 A1<br>WO 2011076485 A1 | 30-06-2011<br>30-06-2011 |
| EP 2138371 A1 | 30-12-2009 | EP 2138371 A1<br>FR 2933247 A1 | 30-12-2009<br>01-01-2010 |
| DE 102007010370 A1 | 18-09-2008 | AT 526192 T<br>DE 102007010369 A1<br>DE 102007010370 A1<br>EP 2018290 A2<br>WO 2007131616 A2 | 15-10-2011<br>29-11-2007<br>18-09-2008<br>28-01-2009<br>22-11-2007 |
| GB 2466973 A | 21-07-2010 | GB 2466973 A<br>US 2010263950 A1 | 21-07-2010<br>21-10-2010 |
| US 2014135169 A1 | 15-05-2014 | CN 104781095 A<br>DE 112013005384 T5<br>US 2014135169 A1<br>WO 2014074586 A1 | 15-07-2015<br>13-08-2015<br>15-05-2014<br>15-05-2014 |
| WO 2016001534 A1 | 07-01-2016 | CN 106470861 A<br>EP 3164285 A1<br>FR 3023218 A1<br>WO 2016001534 A1 | 01-03-2017<br>10-05-2017<br>08-01-2016<br>07-01-2016 |
| FR 2952416 A1 | 13-05-2011 | EP 2499393 A1<br>FR 2952416 A1<br>WO 2011058264 A1 | 19-09-2012<br>13-05-2011<br>19-05-2011 |

EPO FORM P0460

Pour tout renseignement concernant cette annexe : voir Journal Officiel de l'Office européen des brevets, No.12/82